# EUROPEAN PATENT APPLICATION

(11) **EP 4 644 175 A1**
(43) Date of publication of application: **05.11.2025**
(21) Application number: 25170649.5
(22) Date of filing: 15.04.2025
(51) Int. Cl.: B60N 2/90, F16L 33/23, F16L 39/02

(54) **CONNECTOR WITH CLAMP FOR SECURING INFLATABLE BLADDER AIR CHANNELS**

(30) Priority: 01.05.2024 US 202418651910
(71) Applicant: Lear Corporation, Southfield, MI 48033 (US)
(72) Inventor: Blair, Sam, Rochester, MI, 48306 (US); Abdella, David, Farmington Hills, MI, 48336 (US); Cloutier, Timothy, Clawson, MI, 48017 (US); Morris, Matthew, Rochester Hills; MI, 48306 (US)
(74) Representative: Grünecker Patent- und Rechtsanwälte PartG mbB

(57) **Abstract**

A connector includes a connector body and at least one nozzle that projects from the connector body. A clamp comprises opposed nozzle cavities corresponding in shape to the at least one nozzle. The clamp is moveable with respect to the at least one nozzle between an open, unclamped state and a closed, clamped state in which the at least one nozzle is received into the opposed nozzle cavities.

## Description

### BACKGROUND

Automobile seats may include a massage assembly that has inflatable cells or bladders. The bladders are connected via fluid supply lines to a valve arrangement. A pump provides air to the valve arrangement, which directs the air to the bladders to be inflated. The bladders may be inflated and deflated in a sequence to provide a desired massage effect to the seat occupant.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a seat for an automobile.
Figure 2 illustrates a seat bladder system of the seat.
Figure 3 illustrates a connector that has a clamp.
Figure 4 illustrates a portion of the clamp in a closed state.
Figure 5 illustrates a method of assembling a connector with air channels of a bladder system.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

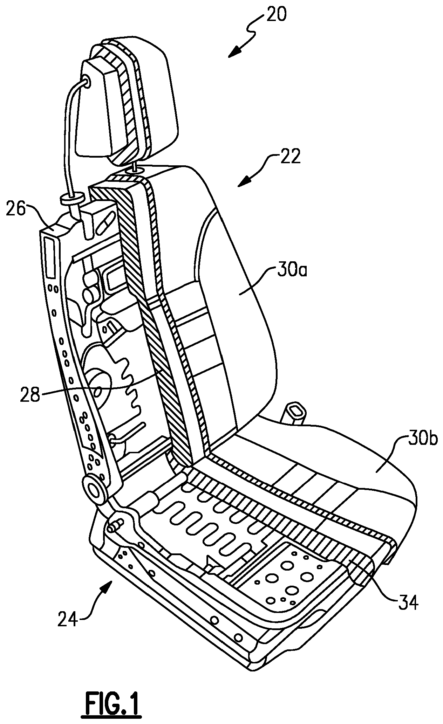

Figure 1 illustrates an example seat 20 for an automobile. In this example, the seat 20 includes a seat back 22 and a seat base 24. A seat frame 26 supports a cushion 28 in the seat back 22, which is covered by trim 30a. In the seat base 24, the frame 26 supports a bottom seat cushion 34, which is covered by seat trim 30b. Although the example seat 20 is for an automobile, it is to be understood that the examples are applicable to other types of vehicles, such as but not limited to, a motorcycle, a watercraft, an aircraft, or a locomotive.

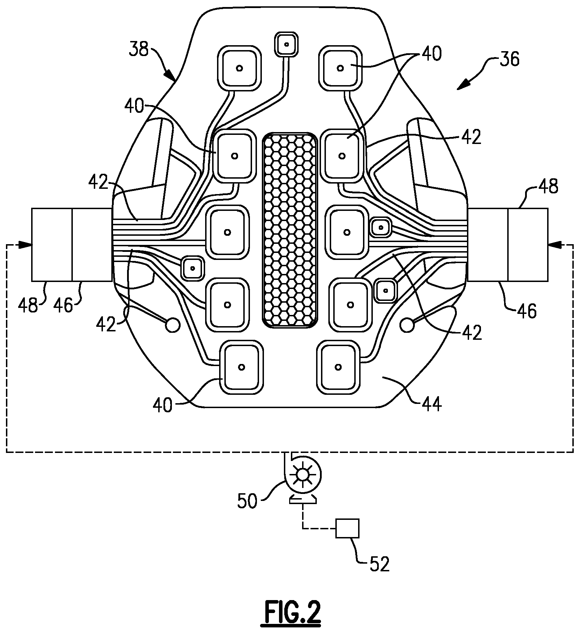

Figure 2 illustrates a seat system 36 for incorporation into the seat 20. The seat system 36 includes a bladder system 38 that includes one or more inflatable bladders 40 and air channels 42 in fluid communication with the bladders 40 for inflating and deflating the bladders 40. As an example, bladders 40 are formed from polymer films (e.g., thermoplastic urethane) that are selectively bonded together to form expandable cells. The bladders 40 are attached with one or more polymer film carrier substrates 44. For instance, the channels 42 are formed between two adjacent polymer films in which the films are welded together along two weld lines such that there is an airtight channel left between the weld lines. The channels 42 are thus integrated into the polymer films of the bladder system 38. Such a configuration is understood to be a "tubeless" bladder system since the channels are built-in to the polymer film carrier substrate 44 rather than provided as separate tubes.

The channels 42 are attached to a connector 46, which is in fluid communication with a valve bank 48. The valve bank 48 is fluidly connected with one or more pumps 50. A processor 52 is connected with the pump 50, to control operation thereof. The processor 52 may also be connected with the valve bank 48 to open and close the valves of the bank 48 to selectively provide air to the bladders 40 via the channels 42. The connector 46 serves to provide an air-tight connection between the channels 42 and the valve bank 48.

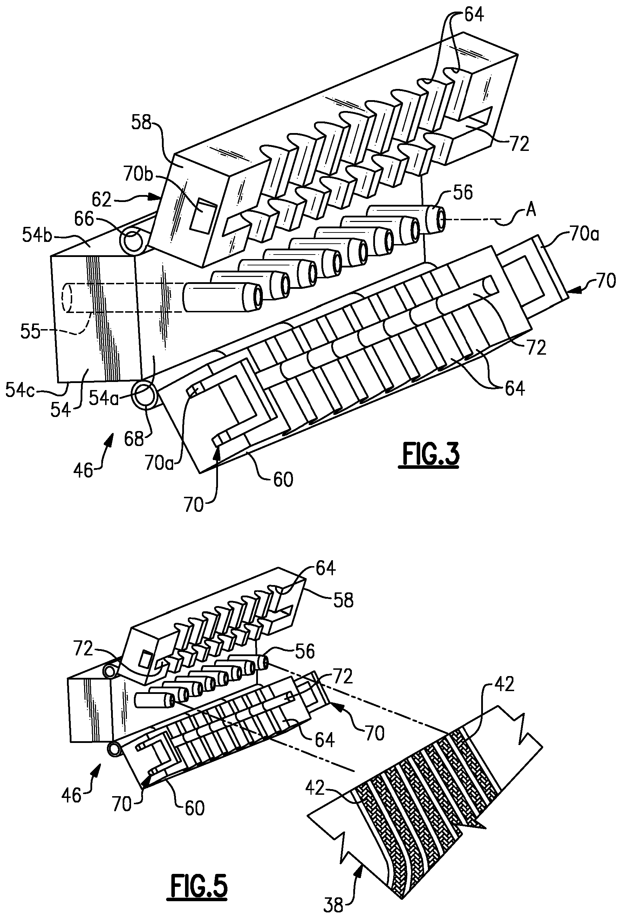

Figure 3 illustrates an example of the connector 46. The connector 46 is of a clamping type and includes a connector body 54 and at least one nozzle 56 that projects from the connector body 54 along a nozzle axis A. The connector body 54 includes air inlets 55 that are in fluid communication with the nozzles 56. That is, each pair of nozzle 56 and its air inlet 55 defines a passage through the connector 46. The valve bank 48 is connected with the air inlets 55 to provide air flow through the passages to the bladders 40. In the illustrated example, the connector 46 has eight nozzles 56 that are parallel to each other (i.e., the nozzle axes A are parallel), but it is to be understood that the number can be varied depending upon how many channels 42 are to be connected (one nozzle 56 for each channel 42). The connector body 54 is generally rectangular in this example and is elongated in one direction so as to accommodate the eight nozzles 56 spaced-apart in a single row. Each nozzle 56 is a relatively short, tapered tube that projects off of a common side 54a of the connector body 54.

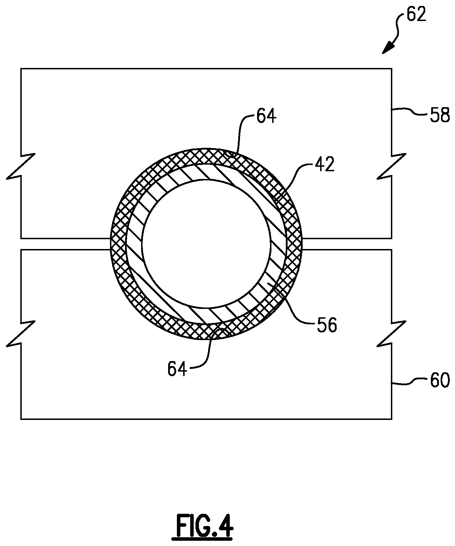

The nozzles 56 are arranged in a single row between jaws 58/60 of a clamp 62. The jaws 58/60 of the clamp 62 include opposed nozzle cavities 64 that correspond in shape to the shape of the nozzles 56. For instance, the nozzles 56 are cylindrical and the cavities 64 are thus semi-cylindrical recesses such that when the jaws 58/60 are brought together approximately half of each nozzle 56 is received into the cavity of the jaw 58 and the other half of each nozzle 56 is received into the opposed cavities 64 of the jaw 60, with a small clearance around the nozzles 56 to the sides of the cavities 64. In this regard, the clamp 62 is moveable with respect to the nozzles 56 between an open, unclamped state (Figure 3) and a closed, clamped state (Figure 4) in which the nozzles 56 are received into the opposed nozzle cavities 64.

The clamp 62 is attached on the connector body 54. For example, each jaw 58/60 is connected to the body 54 by a hinge 66/68. The hinges 66/68 are attached on opposed sides 54b/54c, respectively, of the connector body 54. The jaws 58/60 are rotatable about the respective hinges 66/68 between open and closed states. The hinges 66/68 may be mechanical hinges, such as a butt hinge that is secured with the jaws 58/60 and the connector body 54, or living hinges as shown. For instance, a living hinge is an integral thin flexible element that connects the jaws 58/60 and the connector body 54. Such a living hinge may be molded from plastic with the clamp 62 and body 54, such as by injection molding.

Figure 4 shows a portion of the clamp 62 with the jaws 58/60 in the closed state. When the jaws 58/60 are closed, the nozzle 56 nests (i.e., fits compactly into) into the cavities 64 such that there is a clearance gap between the nozzle 56 and the sides of the cavities 64 in which the channel 42 fits around the nozzle 56. Thus, when the jaws 58/60 are closed, the jaws 58/60 clamp the channel 42 onto the nozzle 56, preventing the channel 42 from sliding off of the nozzle 56 and providing an airtight connection. As shown in Figure 3, the clamp 62 may additionally include a lock 70 to secure the clamp 62 in the closed state. In the illustrated example, the clamp 62 includes a lock 70 at each end of the clamp 62. For instance, the lock 70 includes a lock arm portion 70a on the jaw 60 and a latch portion 70b on the jaw 58. The lock arm portion 70a is rotatable such that when the jaws 58/60 are closed, the lock arm portion 70a can be pivoted toward the jaw 58 to engage the latch portion 70b. The lock arm portion 70a catches on the latch portion 70b and prevents the jaws 58/60 from moving apart and out of the closed state. As will be appreciated, the lock arm portion 70a could alternatively be on the jaw 58 and the latch portion on the jaw 60.

Figure 5 illustrates a method of assembling the connector 46 with the air channels 42. The method includes fitting the air channels 42 onto the nozzles 56. For example, the bladder system 38 and the connector 46 and brought into proximity of each other so as to align the channels 42 with the nozzles 56. The channels 42 are then slid onto the nozzles 56. The clamp 62 is then close around the nozzles 56. The jaws 58/60 of the clamp 62 compress the air channels 42 on the nozzles 56 to form airtight connections. If further sealing is desired, a rubber seal may be provided in grooves 72 in the jaws 58/60. Once the jaws 58/60 are closed, the locks 66 are engaged to secured the jaws 58/60 together and prevent retraction of the channels 42 from the nozzles 56. The polymer films of the bladder system 38 are flexible and not rigid enough to reliably stay connected to the nozzles 56. The clamp 62 of the connector 46 thus serves to secure the bladder system 38 in an airtight manner.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A connector comprising:
a connector body and at least one nozzle projecting from the connector body; and
a clamp comprising opposed nozzle cavities corresponding in shape to the at least one nozzle, the clamp moveable with respect to the at least one nozzle between an open, unclamped state and a closed, clamped state in which the at least one nozzle is received into the opposed nozzle cavities.

2. The connector as recited in claim 1, wherein the clamp is attached on the connector body.

3. The connector as recited in any of the preceding claims, wherein the clamp includes first and second opposed jaws attached to the connector body by, respectively, first and second hinges, the first and second jaws rotatable between the open and closed states.

4. The connector as recited in claim 3, wherein the first and second hinges are living hinges.

5. The connector as recited in claim 3 or 4, wherein the opposed nozzle cavities includes a first semi-cylindrical cavity in the first jaw and a second semi-cylindrical cavity in the second jaw,
wherein preferably the at least one nozzle nests into the first and second semi-cylindrical sections when the clamp is in the closed state.

6. The connector as recited in any of the preceding claims, wherein the clamp includes at least one lock that secures the clamp in the closed state.

7. The connector as recited in any of the preceding claims, wherein the connector body includes at least one air inlet, the at least one air inlet in fluid communication with the at least one nozzle.

8. The connector as recited in any of the preceding claims, wherein the at least one nozzle includes a plurality of nozzles that are tapered tubes that each project along a respective nozzle axes from the connector body, and the nozzle axes are parallel to each other.

9. The connector as recited in any of the preceding claims, wherein the at least one nozzle includes a plurality of nozzles, the opposed nozzle cavities include a plurality of opposed nozzle cavities, and in the closed state the plurality of nozzles are received in the plurality of opposed nozzle cavities.

10. A seat comprising:
a bladder system including at least one inflatable bladder and at least one air channel in fluid communication with the at least one inflatable bladder;
a connector body and at least one nozzle projecting from the connector body, the at least one air channel received by the at least one nozzle; and
a clamp comprising opposed nozzle cavities corresponding in shape to the at least one nozzle, the clamp moveable with respect to the at least one nozzle between an open, unclamped state and a closed, clamped state on the at least one nozzle and the at least one air channel, and in the closed state the clamp compressing the at least one air channel and forming an airtight connection.

11. The seat as recited in claim 10, wherein the clamp includes first and second opposed jaws attached to the connector body by, respectively, first and second hinges, the first and second jaws rotatable between the open and closed states,
wherein preferably at least one of the first and second opposed jaws include a seal channel that intersects the opposed nozzle cavities, and a seal disposed in the seal channel compressing the at least one air channel on the at least one nozzle.

12. The seat as recited in any of claims 10 or 11, wherein the clamp includes at least one lock that secures the clamp in the closed state.

13. A method comprising:
fitting at least one air channel onto at least one nozzle of a connector, the at least one nozzle projecting from a connector body of the connector and the at least one air channel is in a bladder system comprising at least one inflatable bladder in fluid communication with the at least one air channel; and
closing a clamp around the at least one nozzle, the clamp comprising opposed nozzle cavities corresponding in shape to the at least one nozzle, the at least one nozzle and the at least one air channel received by the opposed nozzle cavities when the clamp is in a closed state, the clamp compressing the at least one air channel on the at least one nozzle to form an airtight connection.

14. The method as recited in claim 13, wherein the fitting of the at least one air channel onto the at least one nozzle includes inserting a tip of the at least one nozzle into an open end of the at least one air channel and sliding the at least one air channel over the at least one nozzle.

15. The method as recited in claim 13 or 14, further comprising actuating a lock on the clamp, the lock preventing the clamp from moving from the closed state to an open state.
